Europäisches Patentamt

**European Patent Office**

Office européen des brevets

(19)

(11) Publication number: **0 060 031**

**A2**

(12) # EUROPEAN PATENT APPLICATION

(21) Application number: **82300669.7**

(22) Date of filing: **11.02.82**

(51) Int. Cl.³: **H 01 H 9/02**
**H 01 H 25/06**

(30) Priority: **11.02.81 GB 8104199**

(43) Date of publication of application:
**15.09.82 Bulletin 82/37**

(84) Designated Contracting States:
**AT BE CH DE FR IT LI LU NL SE**

(71) Applicant: **Barker, Paul Joseph**
**9 Market Place**
**Warwick, CV34 4SA(GB)**

(72) Inventor: **Barker, Paul Joseph**
**9 Market Place**
**Warwick, CV34 4SA(GB)**

(74) Representative: **Hallam, Arnold Vincent et al,**
**E.N. LEWIS & TAYLOR 144 New Walk**
**Leicester LE1 7JA(GB)**

(54) **Data entry device.**

(57) A portable entry device comprising two members (12, 16) rotatable one relative to the other into any one of a plurality of preselected relative positions, one of said members (12) being a housing of the device; means (18) coupled to said members for sensing the relative positions of said members and generating a respective electrical signal identifying each said position; and means (24) actuable for enabling transmission of said signal to a store.

**EP 0 060 031 A2**

Croydon Printing Company Ltd

Title:   <u>Data Entry Device</u>

The present invention relates to a data entry device and more particularly to a portable or hand-held data entry device to which information can be input by a user of the device.

Hand-held data entry devices are used, for example, by traffic census takers and in similar outdoor situations where a user needs to input various data to, for example, a computer or a recording and display unit.   One example of the latter is a portable unit which is used at athletics field events to display to the public the results of each competitor's attempt at a particular event,  the information being fed to the unit through a hand-held data entry device by an official.

Conventionally, such data entry devices have a push-button or keyboard array to allow data to be fed in.  The use of push-buttons or keys is a disadvantage in that it is difficult to weatherproof the device and of course since the machines are finger operated this imposes a limitation on the size to which the device can be reduced.  Again the fact that the device is intended to be hand-held limits the number of push-buttons or keys that can be accommodated on the device and therefore the variety of information which can be entered.  In addition, quite often such devices cannot be used when the user  is wearing gloves, which obviously makes the devices less attractive when used in outdoor situations.  Finally, the arrangement or number of push-buttons or keys on such a device cannot be readily altered without necessitating a redesign of the device and again the adaptation of a device to a particular role may result in a design which degrades the weatherproof qualities of the device.

The present invention seeks to provide an improved form of data entry device.

Accordingly the present invention provides a portable data entry device comprising two members rotatable one relative to the other into any one of a plurality of pre-selected relative positions, one of said members being a housing of the device; means coupled to said members for sensing the relative positions of said members and generating a respective electrical signal identifying each said position; and means actuable for enabling transmission of said signal to a store.

In a preferred form of the invention the two members are substantially cylindrical in shape with one member telescopically engaging the other such that the two members are both axially displacable and rotatable relative to one another. The inner member may conveniently carry suitable symbols such as numbers, letters or indication marks on its radially outer surface, each symbol being alignable with a cursor mark on the cooperating end edge region of the outer member by suitably rotating and axially displacing the two members relative to one another. In this particular embodiment the symbols are conveniently located in rows and columns although any preferred uniform or non-uniform configuration may be used.

In another preferred form of the present invention one of the members is a cursor while the other member is a substantially cylindrical member on which the cursor is mounted. The cursor may be in the form of a coaxial transparent cylinder carrying suitable markings which may be aligned with cooperating symbols on the other member by relative rotation of the two members. Another form of cursor comprises a strip of rigid or semi-rigid material whose axis extends parallel with the axis of the other cylindrical member and which is secured at each end to the other member by way of a suitable bearing to allow the cursor to be rotated about the other member. The cursor may be transparent and provided with suitable indicators or marks on its surface. In this event the symbols on the other member are angularly spaced about the circumference and are progressively axially spaced from one end of the other member such that the symbols are arranged helically over $360^{o}$ of the other member's surface. The cursor conveniently carries two parallel lines extending its full length so that alignment with a selected symbol is effected by rotating the cursor to locate the symbol between the two parallel lines. Where the cursor is opaque an opening is conveniently provided to enable the symbols to be viewed through the cursor. In this case the symbols are angularly spaced about the other member's surface at a fixed axial distance from one end of the other member.

In a modification of the above form of the invention a third member is located on the cursor so as to be slidable

relative to the cursor along its axis. The symbols can then
be arranged in rows and columns on the outer surface of the
cylindrical member and alignment effected first by rotating
the cursor relative to the cylindrical member to select the
appropriate column then moving the third member along the
cursor to select the desired symbol in that column, or vice
versa.

The relative positions of each of the movable members of
the device may be sensed by mechanical, electronic, magnetic
or optical means which sense the relative movement of the
members either in discrete steps or continuously and give rise
to the generation of a corresponding signal which varies in
discrete steps or continuously. The signal thus generated can
be recorded or stored in the device, for example magnetically
such as on a magnetic tape or wire, or on a paper roll or in an
electronic memory such as a magnetic bubble memory for retrieval
at a later date. Alternatively, the device can be connected
to a central processor such as a computer for recordal of
input information. The recordal of information or transmission
of information for recordal may be effected by a user of the
device conveniently by actuation of a suitable switch once
the members of the device have been aligned. The switch can
conveniently be a simple pushbutton switch located at one end
of the device. Alternatively, where two telescopic members
are used the switch can be actuated by axially moving the two
members relative to one another and then returning them to
their original positions. The computer may, of course, be a
small computer contained within the device.

The device may be of a uniform cross section along its length or its shape may vary to provide a suitable handgrip. The portion held by the hand of a user may be of a suitable diameter while the operative portion of the device can be of a larger diameter.

The device may include a visual display for displaying the various data recorded using the device.

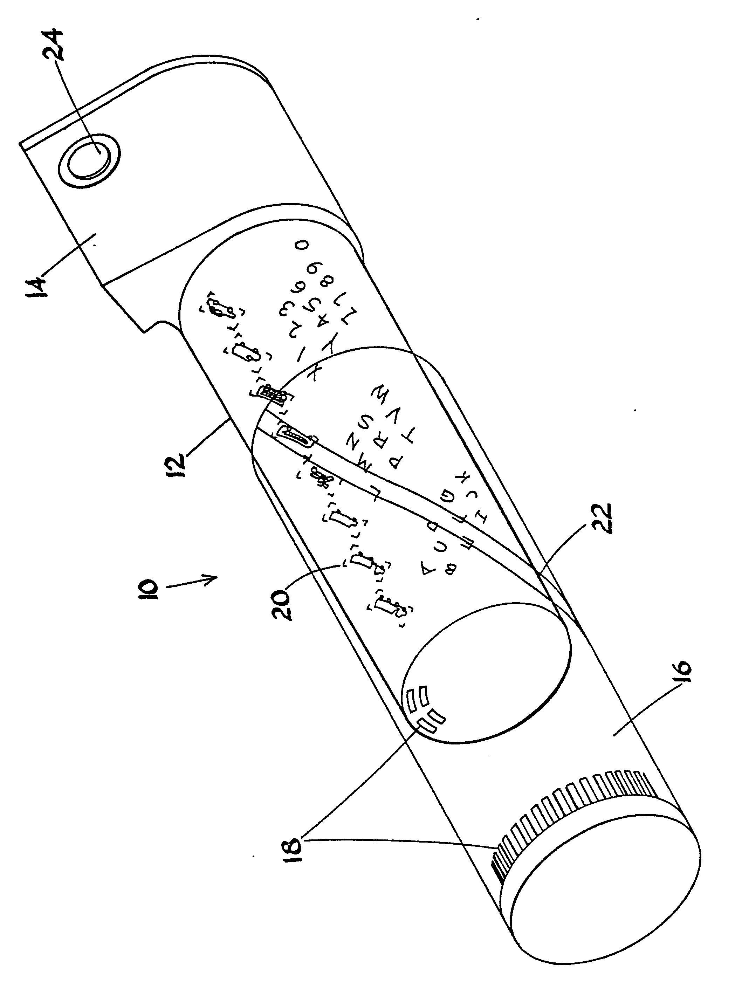

The present invention is further described hereinafter, by way of example, with reference to the accompanying drawing which illustrates a preferred form of the present invention.

The device 10 shown in the drawing has a substantially cylindrical body 12 being formed with a handle 14 at one end. The body 12 telescopically and rotatably engages a cylinder 16 at least the side wall of which is formed of a transparent material. Cooperative position-sensing devices 18, which may be inductive or opto-electronic in nature, are attached to the adjacent ends of the body and cylinder. The body 12 also carries a simple chart 20 which is detachably mounted on the body and carries suitable symbols which can be aligned with parallel cursor lines 22 marked on the cylinder 16. The illustrated simple chart is a chart used for traffic census and may be replaced by additional charts carrying symbols suited to the particular application.

In use, the cylinder 16 is rotated to bring the cursor 22 into alignment with a chosen symbol on the symbol chart. The axial and rotational positions of the body 12 and cylinder 16 are sensed by the position-sensing device 18 which generates an electrical signal unique to that particular position. The position-indicating signal is therefore representative of the particular symbol aligned with the cursor 22 and this signal is transmitted to a store when an actuating button 24 on the handle 14 is pressed by the user. The store can be an electronic store in the body 12 or an external store connected to the device by, for example cable or radio links.

As can be seen in the drawing the cursor 22 is in the form of a helix on the cylinder 16 but any suitable form may be chosen. In the drawing, the cylinder 16 is shown partially withdrawn from the body 12. In use, the cylinder 16 is fully engaged on the body 12 and is retained against axial movement while being rotatable relative to the body 12. The arrangement of symbols on the simple chart is such that only one symbol can be moved into register with the cursor 22 at any one time. As will be appreciated, the device may be modified to incorporate relative axial movement of the cylinder and body.

A ratchet or "click-stop" or similar mechanical connection between the cylinder and body may be provided to ensure a positive movement of the cursor into register with a selected symbol and provide some force restraining relative rotation of the cylinder and body to prevent accidental displacement of the cursor.

In addition, an audible or visual indicator may be provided to indicate, in response to actuation of the button 24, whether or not a valid entry of data has been effected.

In a modification of the illustrated device the arrangement of symbols on the symbol chart may be such that the cursor can be brought into register with two or more symbols at any one time, these symbols being differentiated, for example by being in different colours. A respective data entry button 24 is provided for each of the symbols simultaneously in register with the cursor so that a position-indicating signal representative of that symbol associated with the actuated button is stored.

Data representated by the registration of a symbol with the cursor may also be cancelled from the store by the provision of suitable actuating means.

An internal light source may also be provided to illuminate the symbol chart in dim light.

A device according to the present invention has the advantage that it can easily be weatherproofed and can readily be adapted to vary the types of data recorded using the device.

Finally, the symbols located on the cylindrical member can be grouped or disposed to provide a preferred sequence of data input.

CLAIMS:

1. A portable data entry device characterised by two members (12,16) rotatable one relative to the other into any one of a plurality of pre-selected relative positions, one of said members (12) being a housing of the device; means (18) coupled to said members for sensing the relative positions of said members and generating a respective electrical signal identifying each said position; and means (24) actuable for enabling transmission of said signal to a store.

2. A device as claimed in claim 1 wherein said members, (12,16) are axially displaceable one relative to the other.

3. A device as claimed in claim 1 or 2 wherein the other (16) of said members is in the form of a cursor.

4. A device as claimed in claim 3 wherein said cursor (16) is a substantially cylindrical member of transparent material telescopically engaged with said housing.

5. A device as claimed in any of claims 1 to 4 wherein said store is located in said device.

1/1

00600031